# EUROPÄISCHE PATENTSCHRIFT

(11) **EP 1 089 019 B1**
(45) Veröffentlichungstag und Bekanntmachung des Hinweises auf die Patenterteilung: **31.03.2004**
(21) Anmeldenummer: 00118491.0
(22) Anmeldetag: 25.08.2000
(51) Int. Cl.: F16H 25/20, H02K 7/06

(54) **Linearstellglied**
Linear actuator
Actuateur linéaire

(30) Priorität: 30.09.1999 DE 29917213 U; 06.10.1999 DE 19948265
(43) Veröffentlichungstag der Anmeldung: 04.04.2001
(73) Patentinhaber: Danaher Motion GmbH, 40489 Düsseldorf (DE)
(72) Erfinder: Gutmann, Michael, Dipl.-Ing., 67596 Dittelsheim-Hessloch (DE); Haass, Timo, Dipl.-Ing., 64331 Weiterstadt (DE)
(74) Vertreter: KEIL & SCHAAFHAUSEN

(56) Entgegenhaltungen:
- DE-A- 2 809 954
- FR-A- 2 580 362
- US-A- 2 654 848
- US-A- 4 463 291
- PATENT ABSTRACTS OF JAPAN vol. 2000, no. 01, 31. Januar 2000 (2000-01-31) -& JP 11 299169 A (YASKAWA ELECTRIC CORP), 29. Oktober 1999 (1999-10-29)
- PATENT ABSTRACTS OF JAPAN vol. 010, no. 218 (M-503), 30. Juli 1986 (1986-07-30) & JP 61 055461 A (MASANOBU FUKUZUMI), 19. März 1986 (1986-03-19)

## Beschreibung

Die Erfindung betrifft ein Linearstellglied für die Umsetzung einer rotatorischen Antriebskraft in eine translatorische Stellbewegung gemäß dem Oberbegriff des Anspruchs 1 mit einem Gehäuse, mit einem in dem Gehäuse drehbar gelagerten, bspw. permanenterregten Hohlwellenrotor, der bspw. über einen mehrphasigen Stator oder dgl. drehangetrieben wird, und mit einer in dem Hohlwellenrotor längsverschieblich angeordneten Spindel, die mit einer mit dem Hohlwellenrotor verbundenen Spindelmutter im Gewindeeingriff steht und die gegen eine Eigendrehung abgestützt ist.

Derartige Linearstellglieder werden in vielfältiger Weise eingesetzt, um kurzhübige hin- und hergehende Bewegungen auszuführen. Hierzu wird mit einem entsprechenden Stator ein Drehfeld erzeugt, das einen in dem Motorgehäuse angeordneten Hohlwellenrotor antreibt. In dem Hohlwellenrotor ist eine Spindelmutter vorgesehen, die über eine Passfeder oder dgl. mit dem Hohlwellenrotor verbunden ist, so dass sie sich gemeinsam mit diesem dreht. Durch die Spindelmutter ist eine Kugelrollspindel hindurchgeführt, die über eine Drehmomentenstütze an einer Drehung gehindert wird. Bei einer über die Spindelmutter übertragenen Drehung des Hohlwellenrotors vollzieht die Spindel somit eine translatorische Bewegung relativ zu dem Hohlwellenrotor. Der Hohlwellenrotor bildet ein nach beiden Seiten offenes Rohr, so dass die Spindel je nach Drehrichtung des Motors links oder rechts aus dem Hohlwellenrotor ausfährt. Problematisch ist hierbei die Genauigkeit der Lagerung der Spindel, da eine Verkantung in der Spindelmutter verhindert werden soll. Hierzu kann die Lagerung der Spindel bspw. durch eine zweite Spindelmutter unterstützt werden, durch die die Spindel hindurchfährt. Die auf die Spindel und die Spindelmutter wirkenden Querkräfte sind jedoch relativ hoch, so dass derartige Kugelgewindetriebe oft eine nicht zufriedenstellende Lebensdauer haben und regelmäßig ausgetauscht werden müssen. Es wurde bereits versucht, die Lebensdauer durch Verwendung sogenannter Planetenrollspindeln, die Radialkräfte besser aufnehmen können, zu erhöhen, doch bewirkt dies gleichzeitig eine erhebliche Kostensteigerung.

Um die über die Spindel auf die Spindelmutter wirkenden Querkräfte zu reduzieren und eine Verlängerung der Einsatzzeit zu erreichen, wird in der US gattungsgemäße 4,463,291 ein Linearstellglied vorgeschlagen, bei welchem die Spindel in dem Hohlwellenrotor über ein gleitendes Stützlager gelagert ist, das auf der Spindel angebracht ist und sich mit dieser innerhalb des Hohlwellenrotors verschiebt.

Das Stützlager übernimmt nicht nur die durch die Verschiebung der Spindel benötigte axiale Lagerung, sondern auch die durch die sich drehende Rotorinnenwand aufgebrachte radiale Belastung. Dadurch ist die Spindel quasi spielfrei in dem Hohlwellenrotor gelagert und die auf die Spindel übertragenen Querkräfte können reduziert und die Lebensdauer des Gewindetriebes wesentlich erhöht werden. Der Hohlwellenrotor ist dabei einseitig verschlossen. Ähnliche Linearstellglieder sind auch aus der DE 28 09 954 A1 und der EP 1 057 569 A1 bekannt. Der Einsatz eines Rückmeldesystems für die Motoransteuerung ist bei diesen bekannten Linearstellgliedern durch den begrenzten Bauraum kompliziert. Die Verwendung kostengünstiger Standardbauteile ist daher meist nicht möglich.

Aufgabe der Erfindung ist es demgegenüber, bei einem Linearstellglied mit einfachen Mitteln ein Rückmeldesystem für die Motoransteuerung kostengünstig bereitzustellen.

Diese Aufgabe wird durch ein Linearstellglied nach Anspruch 1 gelöst. Da die auf die Spindel wirkenden Radial- und Axialkräfte nun im Hohlwellenrotor abgefangen werden, ist es nicht mehr notwendig, die Spindel auf beiden Seiten aus dem Hohlwellenrotor herauszuführen und zu lagern. Vielmehr kann der Hohlwellenrotor einseitig verschlossen werden. Dies ermöglicht die Verwendung von Standardmotorgehäusen und Standardelementen, so dass sich die Gesamtkosten des Linearstellgliedes verringern lassen. Erfindungsgemäß wird der Hohlwellenrotor an seinem dem Stützlager der Spindel zugewandten Ende über eine Kappe oder dgl. verschlossen, der ein Gebersystem, z.B. ein sog. Resolver, zur Erfassung der Geschwindigkeit und Lage des Hohlwellenrotors zur Ansteuerung des Motors über eine programmierbare Steuereinheit zugeordnet ist. Die Verwendung derartiger Rückmeldesysteme für die Motoransteuerung war bei herkömmlichen Spindelmotoren mit Hohlwellenrotor mit großem Aufwand verbunden, da Sonderanfertigungen mit einem entsprechenden Innendurchmesser benutzt werden mussten, die auf die Hohlwellen montiert wurden. Demgegenüber können bei der erfindungsgemäßen Ausführung marktübliche Resolver verwendet werden, die kostengünstiger sind und einfach und exakt an den Hohlwellenrotor bzw. an die Endkappe angebaut werden können.

Gemäß einer bevorzugten Ausgestaltung der Erfindung ist an dem der Spindelmutter abgewandten Ende der Spindel ein Zapfen vorgesehen, auf dem das Stützlager angebracht ist. Dadurch wird Platz für die Aufnahme des Stützlagers geschaffen, ohne die Gesamtgröße des Linearstellgliedes, insbesondere den Durchmesser des Hohlwellenrotors, zu vergrößern.

Das Stützlager weist erfindungsgemäß eine Gleitlagerhülse auf, in welche ein oder mehrere Radiallager eingebracht sind. Über das Gleitlager wird die Axialbewegung der Spindel aufgenommen, während die Radiallager die Rotativbewegung des Hohlwellenrotors aufnehmen. Die am Spindelende auftretenden Querkräfte werden somit im Hohlwellenrotor abgefangen und wirken sich in geringerem Maße auf das Gewinde der Spindel und die Spindelmutter aus.

Vorzugsweise ist die Gleitlagerhülse eine mit Graphit oder dgl. versetzte Metallhülse, so dass sie unmittelbar als Gleitlager dienen kann.

Bei einer anderen Ausführungsform ist die Gleitlagerhülse ein vorzugsweise zweiteiliger Ring,. auf den ein Gleitlager aufgeschoben ist. Hierdurch lassen sich standardmäßige Gleitlager verwenden.

In die Gleitlagerhülse sind vorzugsweise zwei Radiallager eingesetzt, zwischen denen ein Distanzring oder dgl. vorgesehen ist, der für einen verspannungsfreien Sitz sorgt.

Diese fest ineinander gefügte Kombination aus Radial- und Axialgleitlager wird auf den an der Spindel vorgesehenen Zapfen aufgeschoben und über Montagescheiben oder dgl. fest verklemmt und/oder verschraubt.

Das die Spindel in dem Hohlwellenrotor abstützende Stützlager trennt den Innenraum des Hohlwellenrotors in erste und zweite Kammern. Um zu verhindern, dass das Stützlager bei einer Hin- und Herbewegung der Spindel als eine Art Kolben wirkt und einen Druck in dem Motorsystem aufbaut, ist gemäß einer bevorzugten Ausgestaltung der Erfindung vorgesehen, dass die erste und zweite Kammer des Hohlwellenrotorinnenraumes über Durchgänge miteinander in Verbindung stehen. Hierdurch wird ein Druckausgleich geschaffen, so dass eine Beeinträchtigung der Motorfunktion durch eine Pumpenfunktion des Stützlagers verringert wird.

In Weiterbildung dieses Erfindungsgedankens ist in der Kappe ein Durchgang ausgebildet, über den die erste Kammer des Hohlwellenrotors mit einem das Gebersystem aufnehmenden Resolverraum verbunden ist, wobei der Resolverraum über einen Durchgang mit einem den Stator oder dgl. aufnehmenden Statorraum verbunden ist und wobei der Statorraum über einen weiteren Durchgang mit der zweiten Kammer des Hohlwellenrotors in Verbindung steht.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung oder deren Rückbeziehung.

Es zeigen:
- Fig. 1: einen schematischen Teilschnitt durch ein erfindungsgemäßes Linearstellglied,
- Fig. 2: eine vergrößerte Darstellung des Stützlagers gemäß einer ersten Ausführungsform und
- Fig. 3: eine vergrößerte Darstellung des Stützlagers gemäß einer zweiten Ausführungsform der Erfindung.

Bei dem in der Zeichnung dargestellten Linearstellglied 1 handelt es sich um einen permanenterregten, mehrphasigen und mehrpoligen Servomotor. Ein Motorgehäuse 2 des Stellgliedes 1 ist über eine Motoraufhängung 3 an einer nicht näher dargestellten Vorrichtung, bspw. einer Schweißzange angebracht und nimmt einen drehbar gelagerten Hohlwellenrotor 4 auf. Zur Lagerung des Hohlwellenrotors 4 ist ein schwimmendes Radiallager 5 und eine Lagerkombination aus Axial- und Radiallagern 6 vorgesehen. Auf der Außenseite des Hohlwellenrotors 3 ist eine Vielzahl von über dem Umfang des Hohlwellenrotors 4 verteilten Magneten 7 angeordnet, die mit einem Magnetfeld in Wechselwirkung treten, das durch einen Stator 8 erzeugt wird, der in einem um den Hohlwellenrotor 4 vorsehenen Statorraum 9 angebracht ist. Grundsätzlich ist es aber auch möglich, den Hohlwellenrotor in herkömmlicher Weise über ein Getriebe anzutreiben.

Mit dem Hohlwellenrotor 4 ist eine Spindelmutter 10 über eine Passfeder 11 oder dgl. drehfest verbunden. Durch die Spindelmutter 10 ist eine als Kugelrollspindel ausgebildete Spindel 12 durchgeführt, die an ihrem aus dem Motorgehäuse 2 herausragenden Ende 13 über eine nicht näher dargestellte Drehmomentenstütze gegen Verdrehen gesichert ist. Dies kann bspw. durch verbinden der Spindel 12 mit einer Roboterschweißzange erfolgen.

An dem anderen Ende der Spindel ist ein Zapfen 14 vorgesehen, der ein weiter unten beschriebenes Stützlager 15 trägt. Der Zapfen 14 kann einstückig mit der Spindel 12 ausgebildet oder mit dieser fest verschraubt sein.

Der die Spindel 12 aufnehmende Innenraum 16 des Hohlwellenrotors 4 wird durch das Stützlager 15 in eine erste Kammer 16a und eine zweite Kammer 16b unterteilt und an dem dem Stützlager 15 abgewandten Ende der ersten Kammer 16a durch eine Kappe 17 verschlossen, die mit dem Hohlwellenrotor 4 verschraubt ist.

In der Kappe 17 sind erste Durchgänge 18 ausgebildet, über die die erste Kammer 16a des Hohlwellenrotors 4 mit einem in dem Motorgehäuse 2 ausgebildeten Resolverraum 19 in Verbindung steht. Der Resolverraum 19 ist über zweite Durchgänge 20 mit dem statorraum 9 verbunden, welcher wiederum über dritte Durchgänge 21 mit der zweiten Kammer 16b des Hohlwellenrotors 4 kommuniziert. Hierdurch wird ein Druckausgleich zwischen den ersten und zweiten Kammern 16a, b des Hohlwellenrotors 4 ermöglicht.

In dem Resolverraum 19 ist an dem Motorgehäuse 2 ein Gebersystem (Resolver) zur Erfassung der Geschwindigkeit und Lage des Hohlwellenrotors 4 angeordnet. Der Resolver 22 erfasst über seinen an der Kappe 17 angebrachten Rotorteil 23 die Rotationsgeschwindigkeit des Hohlwellenrotors 4 und kann dadurch die Geschwindigkeit und Lage der Spindel 12 bzw. eine an deren vorderen Ende angebrachten Werkzeugs, bspw. einer Roboterschweißzange, bestimmen und an eine programmierbare Steuerung weiterleiten, die hiervon ausgehend die von dem Linearstellglied 1 angetriebene Vorrichtung ansteuert.

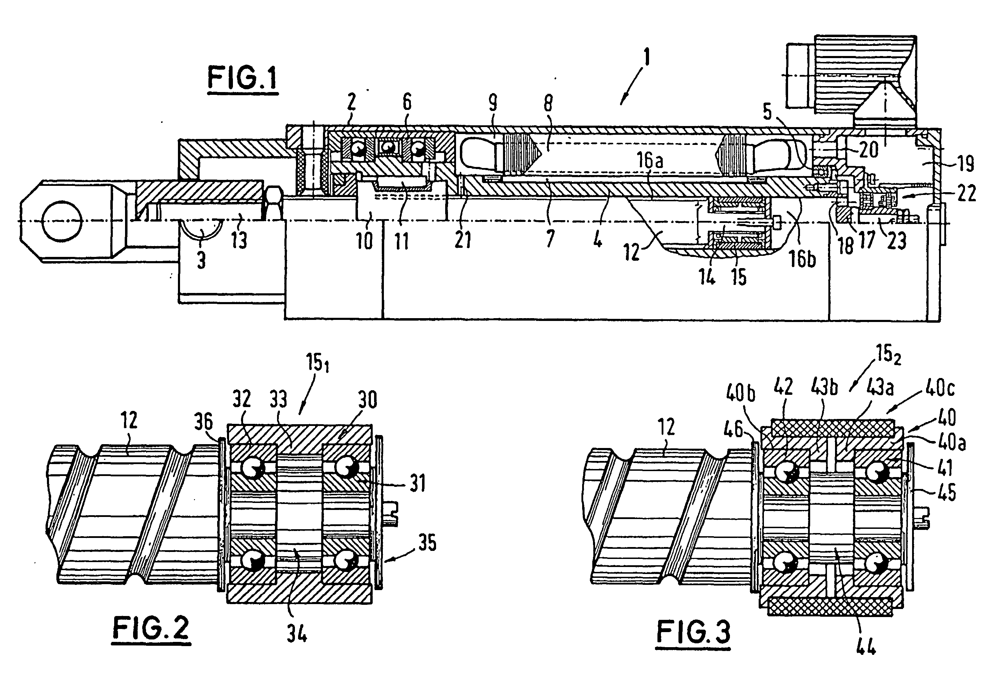

Die Gestaltung des Stützlagers 15 wird anhand der vergrößerten Darstellung in den Fig. 2 und 3 erläutert. Bei der ersten Ausführungsform des Stützlagers 15₁ gemäß Fig. 2 weist das Stützlager 15₁ eine Gleitlagerhülse 30 aus bspw. mit Graphit versetztem Metall aus. In die Gleitlagerhülse 30 sind zwei als Kugellager ausgebildete Radiallager 31, 32 eingesetzt, die gegen einen Absatz 33 der Gleitlagerhülse 30 anliegen und zusätzlich über einen Distanzring 34 verspannungsfrei gehalten werden. Das Stützlager 15₁ wird mit Hilfe von Montagescheiben 35, 36 auf dem Zapfen 14 der Spindel 12 festgeklemmt.

Bei der in Fig. 3 dargestellten zweiten Ausführungsform des Stützlagers 15₂ ist eine als zweiteiliger Ring 40a, 40b ausgebildete Gleitlagerhülse 40 vorgesehen, auf die ein herkömmliches Gleitlager 40c aufgeschoben ist. Zwei als Kugellager ausgebildete Radiallager 41, 42 sind in die Gleitlagerhülse eingeschoben und liegen an Absätzen 43a, b der Ringe 40a, b an. Auch die Radiallager 41, 42 werden über einen Distanzring 44 verspannungsfrei gehalten und mit Hilfe von Montagescheiben 45, 46 auf den Zapfen 14 der Spindel 12 festgeklemmt.

Das erfindungsgemäße Linearstellglied 1 ist im wesentlichen wie oben beschrieben mit einem Stützlager 15₁ oder 15₂ ausgebildet. Da die Wirkung der Stützlagervarianten 15₁ und 15₂ im wesentlichen gleich ist, wird nachfolgend für beide Varianten eine gemeinsame Beschreibung der Funktionsweise des Linearstellgliedes 1 gegeben.

Der permanenterregte, insbesondere 3-phasige und 6-polige Servomotor treibt den Hohlwellenrotor 4 mit Hilfe des durch den Stator 8 erzeugten Magnetfeldes an, so dass sich der Rotor 4 dreht. Dadurch dreht sich auch die mit dem Rotor 4 drehfest verbundene Spindelmutter 10 und fährt die Spindel 12 je nach Drehrichtung des Motors aus dem Hohlwellenrotors 4 aus oder in diesen hinein. Hierbei werden die durch die translatorische Bewegung der Spindel 12 erzeugten Axialkräfte durch das Gleitlager 30, 40 des Stützlagers 15₁ bzw. 15₂ aufgenommen, während die durch die Rotation des Hohlwellenrotors 4 erzeugten Radialkräfte durch die Radiallager 31, 32 bzw. 41, 42 des Stützlagers 15₁ bzw. 15₂ aufgenommen werden. Da das Stützlager 15 die Axial- und Radialkräfte aufnimmt, wird das Gewinde der Spindel 12 im wesentlichen nicht belastet, so dass seine Lebensdauer wesentlich erhöht wird.

Bei einer Hin- und Herbewegung der Spindel 12 in dem Hohlwellenrotor 4 stehen die erste und zweite Kammer 16a, 16b des Hohlwellenrotors 4 über die Durchgänge 18, 20 und 21 miteinander in Verbindung, so dass ein Druckausgleich erfolgt und sich keine die Motorfunktion beeinträchtigender erhöhter Druck aufbauen kann.

Die Drehbewegung der mit dem Hohlwellenrotor 4 verbundenen Kappe 17 wird über das Gebersystem 22 erfasst und hieraus die Geschwindigkeit und Lage des Hohlwellenrotors 4 bestimmt. Da durch die Kappe 17 eine dem Rotor eines Standardmotors entsprechende Rotorausführung erreicht wird, kann ein kostengünstiges marktübliches Rückmeldesystem 22 verwendet werden.

Nachdem die auf die Spindel 12 wirkenden Axial- und Radialkräfte im wesentlichen durch das Stützlager 15 aufgenommen werden, wird die Spindelmutter 10 von auftretenden Querkräften entlastet, so dass sich die Lebensdauer der Spindeleinheit wesentlich verlängern lässt. Gleichzeitig wird auch die Erwärmung der Spindeleinheit und die Belastung der Wälzelemente stark verringert. Hierdurch ist es möglich, als Spindel 12 eine Kugelrollspindel zu verwenden, die kostengünstig hergestellt werden kann.

### Bezugszeichenliste:

- 1: Linearstellglied
- 2: Motorgehäuse
- 3: Motoraufhängung
- 4: Hohlwellenrotor
- 5: Radiallager
- 6: Lagerkombination
- 7: Magnet
- 8: Stator
- 9: Statorraum
- 10: Spindelmutter
- 11: Passfeder
- 12: Spindel
- 13: vorderes Ende der Spindel
- 14: Zapfen
- 15: Stützlager
- 16: Innenraum
- 16a: erste Kammer
- 16b: zweite Kammer
- 17: Kappe
- 18: erster Durchgang
- 19: Resolverraum
- 20: zweiter Durchgang
- 21: dritter Durchgang
- 22: Gebersystem, Resolver
- 23: Stift
- 30: Gleitlagerhülse
- 31: Radiallager
- 32: Radiallager
- 33: Absatz
- 34: Distanzring
- 35: Montagescheibe
- 36: Montagescheibe
- 40: Gleitlagerhülse
- 40a, b: Ring
- 40c: Gleitlager
- 41: Radiallager
- 42: Radiallager
- 43a, b: Absatz
- 44: Distanzring
- 45: Montagescheibe
- 46: Montagescheibe

## Patentansprüche

1. Linearstellglied für die Umsetzung einer rotatorischen Antriebskraft in eine transtatorische Stellbewegung mit:
einem Gehäuse (2),
einem in dem Gehäuse (2) drehbar gelagerten, bspw. permanenterregten Hohlwellenrotor (4), der über einen mehrphasigen Stator (8) oder dgl. drehangetrieben wird, und
einer in dem Hohlwellenrotor (4) längsverschieblich angeordneten Spindel (12), die mit einer mit dem Hohlwellenrotor (4) verbundenen Spindelmutter (10) in Gewindeeingriff steht und gegen eine Drehung abgestützt ist,
wobei die Spindel (12) in dem Hohlwellenrotor (4) über ein gleitendes Stützlager (15) gelagert ist, das auf der Spindel (12) angebracht ist und sich mit dieser innerhalb des Hohlwellenrotors (4) verschiebt, der an seinem dem Stützlager (15) der Spindel (12) zugewandten Ende über eine Kappe (17) verschlossen ist, **dadurch gekennzeichnet, dass** der Kappe (17) ein Gebersystem (22) zur Erfassung der Geschwindigkeit und Lage des Hohlwellenrotors (4) zugeordnet ist.

2. Linearstellglied nach Anspruch 1, **dadurch gekennzeichnet, dass** vorzugsweise an dem der Spindelmutter (10) abgewandten Ende der Spindel (12) ein Zapfen (14) vorgesehen ist, auf dem das Stützlager (15) angebracht ist.

3. Linearstellglied nach Anspruch 1 oder 2, **dadurch gekennzeichnet, dass** das Stützlager (15) eine Gleitlagerhülse (30, 40) aufweist, in welche ein oder mehrere Radiallager (31, 32; 41, 42) eingebracht sind.

4. Linearstellglied nach Anspruch 3, **dadurch gekennzeichnet, dass** die Gleitlagerhülse (30) eine vorzugsweise mit Graphit oder dgl. versetzte Metallhülse ist.

5. Linearstellglied nach Anspruch 3, **dadurch gekennzeichnet, dass** die Gleitlagerhülse (40) einen vorzugsweise zweiteiligen Ring (40a, 40b) aufweist, auf den ein Gleitlager (40c) aufgeschoben ist.

6. Linearstellglied nach einem der Ansprüche 3 bis 5, **dadurch gekennzeichnet, dass** zwischen den Radiallagern (31, 32; 41, 42) ein Distanzring (34; 44) vorgesehen ist.

7. Linearstellglied nach einem der vorhergehenden Ansprüche, **dadurch gekennzeichnet, dass** das Stützlager (15) über Montagescheiben (34, 36; 44, 46) oder dgl. fest auf der Spindel (12) verklemmt wird.

8. Linearstellglied nach einem der vorhergehenden Ansprüche, **dadurch gekennzeichnet, dass** der die Spindel (12) aufnehmende Innenraum (16) des Hohlwellenrotors (4) durch das Stützlager (15) in eine erste und eine zweite Kammer (16a, b) unterteilt wird und dass die erste und die zweite Kammer (16a, b) über Durchgänge (18, 20, 21) miteinander in Verbindung stehen.

9. Linearstellglied nach Anspruch 8, **dadurch gekennzeichnet, dass** in der Kappe (17) ein erster Durchgang (18) ausgebildet ist, über den die erste Kammer (16a) des Hohlwellenrotors (4) mit einem das Gebersystem (22) aufnehmenden Resolverraum (19) verbunden ist, dass der Resolverraum (19) über einen zweiten Durchgang (20) mit einem den Stator (8) oder dgl. aufnehmenden Statorraum (9) verbunden ist und dass der Statorraum (9) über einen dritten Durchgang (21) mit der zweiten Kammer (16b) des Hohlwellenrotors (4) in Verbindung steht.

## Claims

1. A linear actuator for converting a rotary drive force into a translational movement including:
a housing (2),
an e.g. permanently excited hollow shaft rotor (4), which is rotatably mounted in the housing (2) and is rotated by means of a multiphase stator (8) or the like, and
a spindle (12) which is longitudinally movably arranged in the hollow shaft rotor (4) and is in threaded engagement with a spindle nut (10) connected to the hollow shaft rotor (4) and is secured against rotation,
whereby the spindle (12) is mounted in the hollow shaft rotor (4) by means of a sliding support bearing (15), which is mounted on the spindle (12) and moves with it within the hollow shaft rotor (4), which is closed at its end directed towards the support bearing (15) of the spindle (12) by means of a cap (17), **characterised in that** associated with the cap (17) there is a sensor system (22) for detecting the speed and the position of the hollow shaft rotor (4).

2. A linear actuator as claimed in Claim 1, **characterised in that** provided, preferably on the end of the spindle (12) remote from the spindle nut (10), there is a peg (14), on which the support bearing (15) is mounted.

3. A linear actuator as claimed in Claim 1 or 2, **characterised in that** the support bearing (15) has a sliding bearing sleeve (30, 40), into which one or more radial bearings (31, 32; 41, 42) are inserted.

4. A linear actuator as claimed in Claim 3, **characterised in that** the sliding bearing sleeve (30) is a metal sleeve, preferably mixed with graphite.

5. A linear actuator as claimed in Claim 3, **characterised in that** the sliding bearing sleeve (40) has a preferably two-part ring (40a, 40b), onto which a sliding bearing (40c) is slid.

6. A linear actuator as claimed in one of Claims 3 to 5, **characterised in that** a spacer ring (34; 44) is provided between the radial bearings (31, 32; 41, 42).

7. A linear actuator as claimed in one of the preceding claims, **characterised in that** the support bearing (15) is firmly clamped on the spindle (12) by means of mounting discs (34, 36; 44, 46) or the like.

8. A linear actuator as claimed in one of the preceding claims, **characterised in that** the internal space (16) in the hollow shaft rotor (4) accommodating the spindle (12) is divided by the support bearing (15) into first and second chambers (16a, b) and that the first and second chambers (16a, b) communicate with one another via passageways (18, 20, 21).

9. A linear actuator as claimed in Claim 8, **characterised in that** formed in the cap (17) there is a first passageway (18), by means of which the first chamber (16a) in the hollow shaft rotor (4) is connected to a resolver space (19) accommodating the sensor system (22), that the resolver space (19) is connected by means of a second passageway (20) to a stator space (9) accommodating the stator (8) or the like and that the stator space (9) is connected by means of a third passageway (21) to the second chamber (16b) in the hollow shaft rotor (4).

## Revendications

1. Actuateur linéaire pour la transformation d'une force motrice rotative en un mouvement moteur de translation avec :
un carter (2),
un rotor à arbre creux (4), par exemple à excitation permanente, logé dans le carter (2) de façon à pouvoir tourner, lequel rotor est entraîné en rotation par un stator (8) à plusieurs phases ou un dispositif semblable, et
une broche (12) disposée pour pouvoir coulisser longitudinalement dans le rotor à arbre creux (4), laquelle broche est en prise par filetage avec un écrou de broche (10) relié au rotor à arbre creux (4) et est bloquée en rotation,
la broche (12) étant logée dans le rotor à arbre creux (4) au moyen d'un palier support glissant (15) qui est placé sur la broche (12) et coulisse avec celle-ci à l'intérieur du rotor à arbre creux (4) lequel est fermé à son extrémité faisant face au palier support (15) de la broche (12) par un capuchon (17), **caractérisé en ce qu**'un système de capteur est attribué au capuchon (17) pour la détermination de la vitesse et de la position du rotor à arbre creux (4).

2. Actuateur linéaire selon la revendication 1, **caractérisé en ce qu**'un tenon (14) est prévu, de préférence sur l'extrémité de la broche (12) opposée à l'écrou de broche (10), sur lequel est disposé le palier support (15).

3. Actuateur linéaire selon la revendication 1 ou 2, **caractérisé en ce que** le palier support (15) est muni d'un manchon de palier glissant (30, 40) dans lequel peuvent être disposés un ou plusieurs roulements radiaux (31, 32 ; 41, 42).

4. Actuateur linéaire selon la revendication 3, **caractérisé en ce que** le manchon de palier glissant (30) est un manchon métallique doté de préférence avec du graphite ou un produit similaire.

5. Actuateur linéaire selon la revendication 3, **caractérisé en ce que** le manchon de palier glissant (40) est muni d'un anneau de préférence en deux parties (40a, 40b) sur lequel est glissé un palier glissant (40c).

6. Actuateur linéaire selon l'une des revendications 3 à 5, **caractérisé en ce qu'**une bague d'espacement (34 ; 44) est prévue entre les roulements radiaux (31, 32 ; 41, 42).

7. Actuateur linéaire selon l'une des revendications précédentes, **caractérisé en ce que** le palier support (15) est bloqué au moyen de rondelles de montage (34, 36 ; 44, 46) ou de dispositifs similaires.

8. Actuateur linéaire selon l'une des revendications précédentes, **caractérisé en ce que** l'espace intérieur (16) du rotor à arbre creux (4) recevant la broche (12) est divisé par le palier support (15) en une première et une deuxième chambres (16a, b) et **en ce que** la première et la deuxième chambres (16a, b) sont en contact l'une avec l'autre au moyen de passages (18, 20, 21).

9. Actuateur linéaire selon la revendication 8, **caractérisé en ce qu'**un premier passage (18) est formé dans le capuchon (17) mettant en contact la première chambre (16a) du rotor à arbre creux (4) avec une chambre de capteurs (19) recevant le système de capteurs (22), **en ce qu'**un deuxième passage (20) met en contact la chambre de capteurs (19) avec un compartiment de stator (9) recevant le stator (8) ou le dispositif similaire et **en ce qu'**un troisième passage (21) met en contact le compartiment de stator (9) avec la deuxième chambre (16b) du rotor à arbre creux (4).
